Europäisches Patentamt

European Patent Office

Office européen des brevets

(19)

(11) **EP 0 761 796 B1**

(12) **EUROPEAN PATENT SPECIFICATION**

(45) Date of publication and mention
of the grant of the patent:
**17.04.2002 Bulletin 2002/16**

(21) Application number: **94925653.1**

(22) Date of filing: **15.08.1994**

(51) Int Cl.[7]: **C09K 5/04**

(86) International application number:
**PCT/RU94/00191**

(87) International publication number:
**WO 95/29210 (02.11.1995 Gazette 1995/47)**

(54) **WORKING MIXTURE FOR REFRIGERATION MACHINERY**

ARBEITSMISCHUNG FÜR KÜHLANLAGEN

MELANGE DE FONCTIONNEMENT POUR EQUIPEMENT DE REFRIGERATION

(84) Designated Contracting States:
**DE ES FR GB IT**

(30) Priority: **27.04.1994 RU 94015395**

(43) Date of publication of application:
**12.03.1997 Bulletin 1997/11**

(73) Proprietor: **Joint Stock Company "INERTEK"
Moscow 123182 (RU)**

(72) Inventors:
 • **BARABANOV, Valery Georgievich
  S. Petersburg, 192239 (RU)**
 • **BELYAEV, Andrei Jurievich
  Moscow, 125239 (RU)**
 • **EGOROV, Sergei Dmitrievich
  Moscow, 129224 (RU)**
 • **KONDRATIEV, Jury Roaldovich
  Khimki-Moskovskaya obl., 129224 (RU)**
 • **KOROTEEV, Anatoly Sazonovich
  Moscow, 129329 (RU)**
 • **PONOMAREV-STEPNOI, Nikolai Nikolaevich
  Moscow, 123098 (RU)**
 • **RUVINSKY, Genrikh Yakovlevich
  Odessa, 270076 (UA)**
 • **KHMELNUK, Michail Georgievich
  Odessa, 270008 (UA)**
 • **CHIKUROV, Sergei Konstantinovich
  Moscow, 125083 (RU)**

(74) Representative: **Rambelli, Paolo et al
c/o JACOBACCI & PERANI S.p.A.
Corso Regio Parco, 27
10152 Torino (IT)**

(56) References cited:
 **EP-A- 0 381 389**     **WO-A-93/15161**
 **GB-A- 2 228 739**    **GB-A- 2 247 462**
 **SU-A- 1 090 699**

 • **DATABASE WPI Week 8928 Derwent
  Publications Ltd., London, GB; AN 89-202052
  XP002027366 & JP 01 139 677 A (ASAHI GLASS)**
 • **PATENT ABSTRACTS OF JAPAN vol. 013, no.
  394 (C-631) & JP 01 139677 A (ASAHI GLASS)**

Remarks:
The file contains technical information submitted
after the application was filed and not included in this
specification

## Description

Field of the Invention

The present invention relates to refrigeration equipment, and particularly, to household refrigerators, and can be utilized in medium-temperature refrigerators, air-conditioners, including vehicle and heat pumps, and for conducting researches.

Background of the Invention

In the art are known several trends of developing refrigerants as replacements for R12 refrigerant, not depleting ozone layer of the earth's atmosphere. One of said trends is based on utilization of hydrocarbons in a refrigerant composition.

Known in the art is a refrigerant blend consisting of a mixture of chlorodifluoromethane ($CHF_2CL$, R22) with isobutane ($C_4H_{10}$, R600a) and comprising from 65 to 80 weight percent of chlorodifluoromethane and from 20 to 35 weight percent of isobutane (GB, A, 2228739).

The aforementioned refrigerant blend possesses the refrigeration capacity and energy efficiency comparing favorably with dichloro-difluoromethane ($CF_2Cl_2$, R12), but exerts less impact on the earth's ozone layer.

However, said refrigerant blend is a nonazeotropic composition which reduces an efficiency of filing up a refrigerant into a refrigeration unit under the industrial scale conditions, and also complicates performance of the refrigerator when refilling is needed. Additionally, R22 refrigerant relates to a group of the so-called "transient" refrigerants and, according to the international agreements on the Earth's atmospheric ozone layer protection, its usage should be completely terminated by 2020.

Known in the art are refrigerant blends based on more environmentally acceptable refrigerants than R22.

Particularly, known is pentafluoroethane-based refrigerant blend ($C_2HF_5$, R125) containing isobutane R600a. This composition comprises from 60 to 80 weight percent of R125 (GB, A, 2247462).

Utilization of said blend in refrigerators is complicated due to an undeveloped commercial technology of R125 refrigerant production. In addition, relatively high content of fluorine in R125 molecule (5 atoms) causes an increased consumption of fluorine to produce said refrigerant and, as a result, raises its cost.

It should be noted that under temperatures inherent to refrigerator evaporators (from -20 to -25°C), said composition would have a pressure higher than a pressure of R12, which entails problems of its utilization as a substitute for of R12.

Also, known in the art is a refrigerant blend consisting essentially of 1,1,2,2-tetrafluoroethane ($CHF_2CHF_2$, R134) and isobutane R600a and comprising from 70 to 99 weight percent of 1,1,2,2, tetrafluroethane and from 1 to 30 weight percent of isobutane (PCT/US 92/02136).

The advantage of said refrigerant blend resides in its azeotropic nature. However, R134 refrigerant used as a base for the aforementioned composition possesses high global warming factor of 0,3 which does not entirely meet the environmental safety requirements.

Also, known are compositions for refrigerators, based on 1,1-difluoroethane ($CHF_2CH_3$, R152a).

Said refrigerants, similarly to R134, have zero ozone depletion potential, however, as compared to R134, they have 10 times lower global warming factor (0,03) and better oil solubility.

Under the normal atmospheric pressure, difluroethane boils at -25°C and is close to R12 by its thermodynamic properties.

Also, known in the art is a refrigerant blend based on 1,1-difluoroethane (R152a), additionally comprising chlorodifluoromethane (R22) at the following content of components: from 50 to 65 weight percent of 1,1-difluoroethane and from 35 to 50 weight percent of chlorodifluoromethane R22 (DD, A, 271122).

Under the components ratio R22/R152a close to 40:60, said composition has an azeotropic nature and the energy characteristics there of correspond to those of R12 when it is used as a refrigerant.

However, said 1,1-difluoroethane-based refrigerant blend has certain disadvantages. As mentioned above, R22 refrigerant is a transient composition and should be taken from utilization. Owing to its presence in a refrigerant composition, the blend has other than zero ozone depletion potential. Additionally, R22 is relatively poor soluble in mineral oils used for compressor lubrication which aggravates performance of the equipment.

The energy efficiency of equipment filled up with said refrigerant blend can not be raised due to different molecular masses of components included thereto. Thus, molecular mass of R22 is 86.5 and that of R152a is 66.1. A mixture of said gases flowing through a constriction or a capillary, according to Fick's second law, fractionates into components at a factor proportional to $\sqrt{M_1/M_2}$, where $M_1$ and $M_2$ are molecular masses of the components. Moreover, having passed through a constriction, the lighter component is enriched and the heavier one depleted. As a result, different concentration zones, other than the original ones, appear in a closed gas cycle.

Hence, an equipment using such a blend loses stability of working parameters due to an alternating variation of the refrigerant component contents which leads to a failure of condenser operation, to unstable operation of evaporator and, ultimately, to energy consumption raise. Also known in the in the art (JP 01139677) is a refrigerator blend containing as essential components: (A) at least one hydrocarbon compound with 4-5 carbon atoms; (B) dichlorodifluoromethane; and (C) 1,1-difluoroethane. However, since such a refrigerator blend does not passes an azeotropic nature, its operational and energy characteristics will be reduced accordingly. Moreover, dichloro-difluoromethane is a chlorine containing compound that depletes the Earth's ozone layer.

Summary of the Invention

The object of the present invention is to provide a 1,1-difluoroethane-based refrigerant blend ensuring better ozone layer safety, increase of energy efficiency and improving a reliability of refrigerator performance.
The present invention provides a reduction of ozone depletion potential of a 1,1-difluoroethane-based refrigerant blend and an increase of a refrigeration coefficient.
Said object is attained by 1,1-difluoroethane-based refrigerant blend (R152a), additionally comprising isobutane (R600a).
The blend of the invention comprises from 60 to 75 weight percent of 1,1-difluoroethane and from 25 to 40 weight percent of isobutane.
The preferred relationship of the components in said blend is R152a/R600a:70/30.
Utilization of isobutane possessing zero ozone depletion potential as a component of the 1,1-difluoroethane-based refrigerant blend, provides an appropriate zero value of this factor to the entire blend.
Also, molecular mass of isobutane (58.12) is closer to the same factor of R152a (66.1), that of R22 (86.5). Therefore, a proportionality ratio defining an extent of fractionating the refrigerant blend component concentrations and equal to $\sqrt{M_1/M_2}$, where $M_1$ and $M_2$ are molecular masses of the components, is 1.14 for the prior art refrigerant blend and 1.07 - for the blend according to the present invention. This, in its turn, reduces a probability of fractionating the components concentrations and, thus, reduces deviations over the optimal level of a refrigerator energy consumption.
Estimations and tests revealed that within the proposed range of quantitative content of components according to the present invention, the refrigerant blend is an equal boiling mixture of azeotropic or close to azeotropic nature. This is particularly proved by the plots demonstrating the refrigerant blend pressure variation with R152a content.

Brief Description of the Drawings

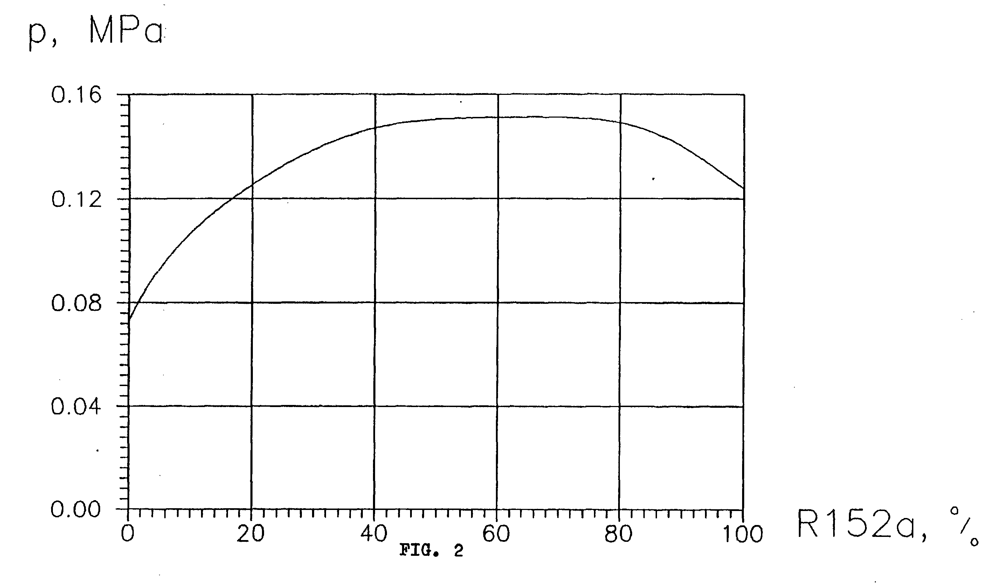

Figure 2 is a plot of variation of a refrigerant blend pressure with R152a concentration at temperature 313.5 K.

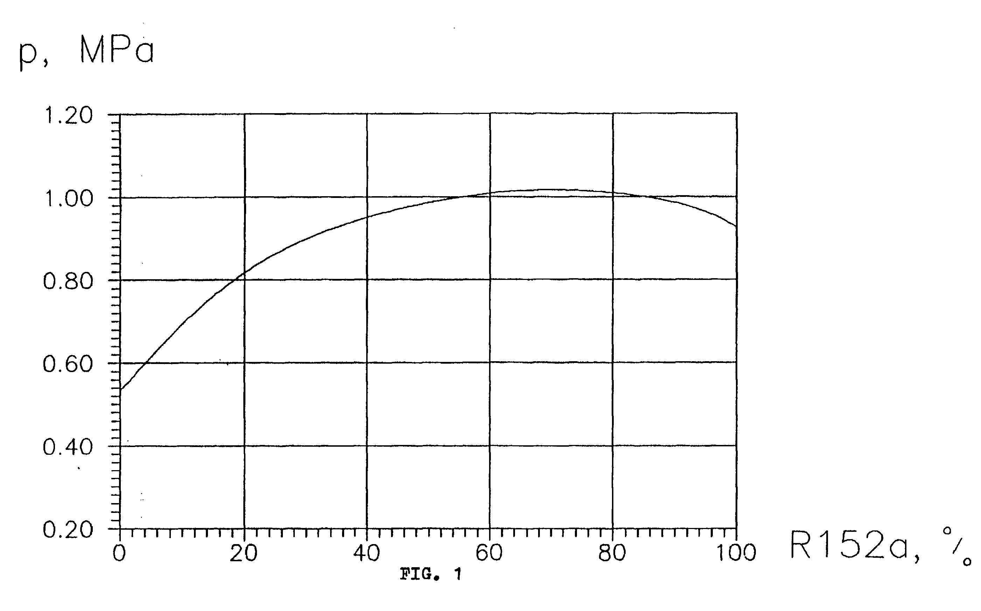

Figure 1 is a plot of variation of a refrigerant blend pressure with R152a concentration at temperature 353.15 K.
The aforementioned advantages, as well as the features of the present invention are disclosed in the following description of the best mode of practicing the invention and are substantiated by estimated and test data of cycle refrigeration coefficient for the blend according to the present invention, as compared with R12 refrigeration coefficient.

The Best Mode of Practicing the Invention

Before filling up a refrigerator, a mixture of a predetermined quantitative content is prepared in a separate reservoir on the weight basis.
To prepare 1 kg of the blend, 700 g of refrigerant (R152a) is poured to 300 g of isobutane (R600a) from a cylinder previously connected to a cylinder with isobutane.
A refrigerator filling rate is defined on the basis of changing the weight of the cylinder containing P152a/P600a blend, which is connected to a suction pipe of the refrigerator compressor.
For a refrigerator of "Birjusa-2" model, R152a/R600a filling rate is 80 g. The filling tube of a refrigeration unit is connected through a T-joint to the cylinder with the blend and to a vacuum pump. To remove foreign gases, the refrigeration unit should be pre-evacuated, a cylinder with the blend being closed at that time.
After evacuation of foreign gases, the refrigerator is filled up with the blend at compressor actuated. The blend in a gaseous form is pumped into a refrigeration unit. The cylinder is located on a balance. After changing the weight of the cylinder by 80 g, the filling operation is terminated.
The best filling rate for each refrigerator type is defined in view of a minimum daily energy consumption.
Table 1 shows data for "Birjusa" refrigerator daily energy consumption when it operates on the refrigerant blend according to the present invention at concentration ratio R152a/R600a equal to 70 ÷ 30, and also when using R134a and R12 as refrigerants.

Table 1

| Refrigerant | Filling rate, g | to in low-temp. heat exchanger °C | to in high-temp. heat exchanger °C | Daily energy consumption kW/h per day |
|---|---|---|---|---|
| R134a | 110 | -18.1 | +2.0 | 2.0 |
| P12 | 120 | -18.2 | +2.3 | 1.8 |
| R152a/R600a | 80 | -18.1 | +2.2 | 1.75 |

From Table 1 follows that when using R12 and R134a as refrigerants, a refrigerator daily energy consumption is higher than the same when using 1,1-difluoroethane-based refrigerant blend according to the present invention.

Table 2 depicts estimated and test data of a cycle refrigeration coefficient for R152a/R600a blend according to the present invention in comparison with R12 refrigeration coefficient. The latter has been chosen in view of substantial identity of its thermal characteristics to similar characteristics of R152a/R22 refrigerant blend, taken as a prototype, under an azeotropic relationship of components.

Values of refrigeration coefficient E are given for $t_{boil}$= 20°C, $t_{cond}$= 55°C and temperature before a compressor $t_{comp}$= 32°C.

Table 2

| R152a/R600a, percent by mass | Refrigeration coefficient E | $E_{<blend>}$ to $E_{<R12>}$ ratio |
|---|---|---|
| 50/50 | 0.846 | 0.99 |
| 55/45 | 0.852 | 0.99 |
| 60/40 | 0.858 | 1.00 |
| 65/35 | 0.861 | 1.01 |
| 70/30 | 0.861 | 1.01 |
| 75/25 | 0.857 | 1.01 |
| 80/20 | 0.847 | 0.99 |
| R12 | 0.855 | 1.00 |

Table 3 shows data of heat measurements of a compressor of XKB model for three specific compositions of the refrigerant blend according to the present invention in comparison with R12, R152a and R600a refrigerants.

Table 3

| Parameters | R12 | R152a | R600a | R152a/R600a | | |
|---|---|---|---|---|---|---|
| | | | | 50/50 | 70/30 | 90/10 |
| Evaporator pressure ($P_{boil/atm}$) | 1.53 | 1.24 | 0.73 | 1.18 | 1.55 | 1.3 |
| Condenser pressure ($P_{cond/atm}$) | 14.5 | 13.7 | 7.85 | 13.8 | 14.6 | 14.4 |
| Refriger. capacity ($Q_o$/W) | 173 | 145 | 84 | 148 | 180 | 153 |
| Specific refriger. capacity | 1.15 | 1.0 | 0.9 | 1.02 | 1.2 | 1.04 |

The tests were carried out under conditions similar to conditions of testing a refrigeration coefficient behavior. From Tables 2 and 3 is seen that within the ranges of R152a concentrations from 60 to 75 weight percent and R600a concentrations from 25 to 40 weight percent, the refrigeration coefficient is increased.

Therefore, by adding isobutane to difluoroethane there is obtained a blend of two mutually soluble components having close molecular weights, possessing zero ozone depletion potential, the energy efficiency thereof being substantially equal to the same of R12 within a wide range of component concentrations.

Moreover, the refrigerant blend within the concentration range according to the present invention has an azeotropic character and provides a refrigeration coefficient value exceeding that of R12 and of the prototype, respectively.

Industrial Applicability

A refrigerant blend according to the present invention can be utilized in medium-temperature refrigeration equipment and air conditioners, including vehicle and thermal pumps. Additionally, the blend can be used in existing refrigerators without essential structural modification thereof.

**Claims**

1. A 1,1-difluoroethane-based refrigerant blend comprising isobutane, **characterised in that** it comprises from 60 to 75 weight percent of 1,1-difluoroethane and from 25 to 40 weight percent of isobutane.

2. The refrigerant blend according to claim 1, **characterised in that** it comprises 70 weight percent of 1,1-difluoroethane and 30 weight percent of isobutane.

**Patentansprüche**

1. Eine Kühlmittel-Mischung auf Basis von 1,1-Difluorethan enthaltend Isobutan, **dadurch gekennzeichnet, dass** es zwischen 60 und 75 Gewichtsprozent 1,1-Difluorethan und zwischen 25 und 40 Gewichtsprozent Isobutan enthält.

2. Eine Kühlmittel-Mischung gemäß Anspruch 1, **dadurch gekennzeichnet, dass** es 70 Gewichtsprozent 1,1-Difluorethan und 30 Gewichtsprozent Isobutan enthält.

**Revendications**

1. Mélange réfrigérant à base de 1,1-difluoroéthane comprenant de l'isobutane, **caractérisé en ce qu'**il comprend de 60 à 75 % en poids de 1,1-difluoroéthane et de 25 à 40 % en poids d'isobutane.

2. Mélange réfrigérant selon la revendication 1, **caractérisé en ce qu'**il comprend 70 % en poids de 1,1-difluoroéthane et 30 % en poids d'isobutane.

FIG. 1

EP 0 761 796 B1

FIG. 2